# EUROPÄISCHE PATENTSCHRIFT

(11) **EP 2 609 256 B1**
(45) Veröffentlichungstag und Bekanntmachung des Hinweises auf die Patenterteilung: **06.07.2016**
(21) Anmeldenummer: 11735382.1
(22) Anmeldetag: 13.07.2011
(51) Int. Cl.: E01B 29/06, E01B 35/04, B61K 9/08

(54) **MESSVORRICHTUNG UND VERFAHREN ZUR ABTASTUNG VON SCHWELLEN.**
MEASURING DEVICE AND METHOD FOR SCANNING TIES
DISPOSITIF DE MESURE ET PROCÉDÉ POUR BALAYER DES TRAVERSES

(30) Priorität: 27.08.2010 AT 14342010
(43) Veröffentlichungstag der Anmeldung: 03.07.2013
(73) Patentinhaber: Plasser & Theurer Export von Bahnbaumaschinen Gesellschaft m.b.H., 1010 Wien (AT)
(72) Erfinder: THEURER, Josef, A-1010 Wien (AT); LICHTBERGER, Bernhard, A-4230 Pregarten (AT)
(86) Internationale Anmeldenummer: PCT/EP2011/003490
(87) Internationale Veröffentlichungsnummer: WO 2012/025172

(56) Entgegenhaltungen:
- WO-A1-2008/125168
- WO-A2-2006/004846
- US-A- 5 605 099
- US-A1- 2005 235 864
- US-B2- 6 662 728

## Beschreibung

Die Erfindung betrifft eine Messvorrichtung zur Abtastung von auf einer Schotterbettung aufliegenden Schwellen mit Hilfe eines berührungslos wirkenden, auf einem Maschinenrahmen positionierten Distanzmessers, sowie ein Verfahren.

Eine derartige Vorrichtung ist beispielsweise durch US 6 662 728 bekannt und dient dazu, mit der Erkennung der Schwellenposition die Arbeitsvorfahrt einer Stopfmaschine zu steuern bzw. deren Stopfaggregate über zwei benachbarten Schwellen zu zentrieren. Anfang und Ende einer Schwelle werden jeweils durch eine sprunghafte Distanzänderung in Bezug auf die angrenzende Schotterfläche registriert.

Die Aufgabe der vorliegenden Erfindung liegt nun in der Schaffung einer Messvorrichtung sowie eines Verfahrens der eingangs genannten Art, um damit eine exakte Lage der Schwelle registrieren zu können.

Diese Aufgabe wird erfindungsgemäß mit einer Messvorrichtung der gattungsgemäßen Art durch folgende Merkmale gelöst:
a) es sind zwei - in einer normal zu einer Maschinenlängsrichtung bzw. in einer Schwellenlängsrichtung verlaufenden Richtung - voneinander distanzierte Distanzmesser vorgesehen,
b) beide Distanzmesser sind auf einem durch ein Gelenk mit dem Maschinenrahmen verbundenen Messrahmen angeordnet, und
c) der Messrahmen ist mit einem Inklinometer für eine automatische Positionierung der beiden Distanzmesser in einer horizontalen Lage verbunden.

Mit einer derartig ausgebildeten Vorrichtung ist es nunmehr möglich, die Lage einer Schwelle sowohl in Bezug auf eine Horizontale als auch in Bezug auf die benachbarte Schwelle exakt zu registrieren. Infolge der nunmehr bekannten Raumlage ist beispielsweise die Ablage von Neuschwellen im Rahmen der Schaffung eines neuen Gleises sofort und exakt kontrollierbar. Im Falle einer außerhalb der Toleranzgrenze liegenden Fehlposition der Schwelle kann in vorteilhafter Weise ein akustischer Warnton abgegeben oder die Schwelle farblich markiert werden.

Weitere Vorteile der Erfindung ergeben sich aus den weiteren Ansprüchen und der Zeichnungsbeschreibung.

Im Folgenden wird die Erfindung anhand eines in der Zeichnung dargestellten Ausführungsbeispieles näher beschrieben. Es zeigen: Fig. 1 eine Seitenansicht eines Maschinenteiles zur Ablage von neuen Schwellen, Fig. 2 eine Ansicht einer Messvorrichtung zur Abtastung der Schwellenlage in Maschinenlängsrichtung, und Fig. 3 bis 5 je eine vereinfachte Darstellung von Messergebnissen.

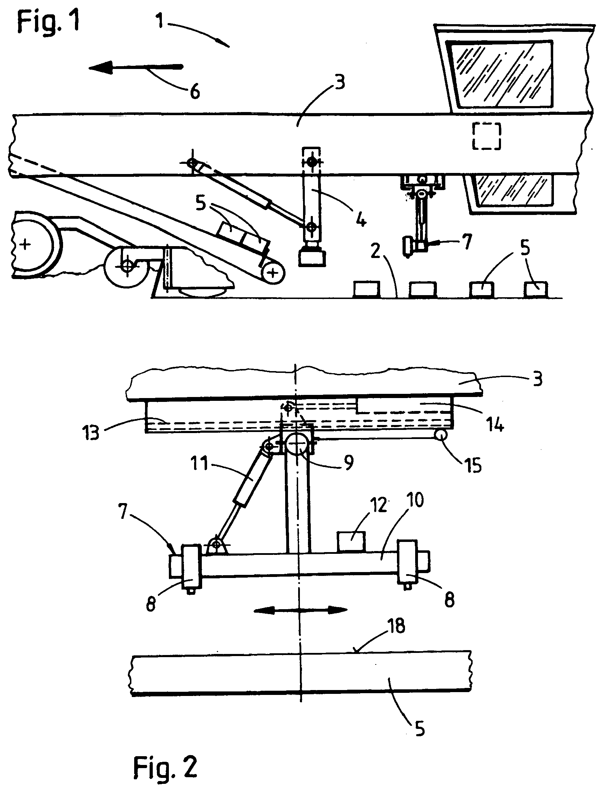

Eine in Fig. 1 zum Teil ersichtliche Maschine 1 dient zur Verlegung eines neuen Gleises auf einer planierten Schotterbettung 2, wobei der besseren Übersicht wegen lediglich ein die Schwellenablage durchführender Abschnitt dargestellt ist. Auf einem Maschinenrahmen 3 ist eine Verlegeeinheit 4 zur Ablage von Schwellen 5 befestigt. An diese angrenzend - bzw. in Bezug auf eine Maschinenlängsrichtung bzw. Arbeitsvorfahrt 6 unmittelbar dahinter angeordnet - befindet sich eine Messvorrichtung 7 zur Abtastung der auf der Schotterbettung 2 abgelegten Schwellen 5.

Wie insbesondere in Fig. 2 ersichtlich, sind auf der Messvorrichtung 7 zwei - in einer normal zur Maschinenlängsrichtung 6 bzw. in einer Schwellenlängsrichtung verlaufenden Richtung - voneinander distanzierte, berührungslos wirkende Distanzmesser 8 vorgesehen. Diese sind auf einem durch ein Gelenk 9 mit dem Maschinenrahmen 3 verbundenen Messrahmen 10 angeordnet. Zu dessen Verschwenkung um eine in Maschinenlängsrichtung 6 verlaufende Achse des Gelenkes 9 ist ein Antrieb 11 vorgesehen. In Verbindung mit einem am Messrahmen 10 befestigten Inklinometer 12 sind die beiden Distanzmesser 8 durch entsprechende Aktivierung des Antriebes 11 automatisch und permanent in einer horizontalen Lage positionierbar.

Mit Hilfe einer Führung 13 sowie eines Antriebes 14 ist der Messrahmen 10 mitsamt dem Gelenk 9 in einer normal zur Maschinenlängsrichtung 6 verlaufenden Querrichtung bzw. Schwellenlängsrichtung relativ zum Maschinenrahmen 3 verschiebbar. Zur Erfassung eines Verschiebeweges zwischen Maschinen- und Messrahmen 3, 10 ist ein Wegaufnehmer 15 vorgesehen.

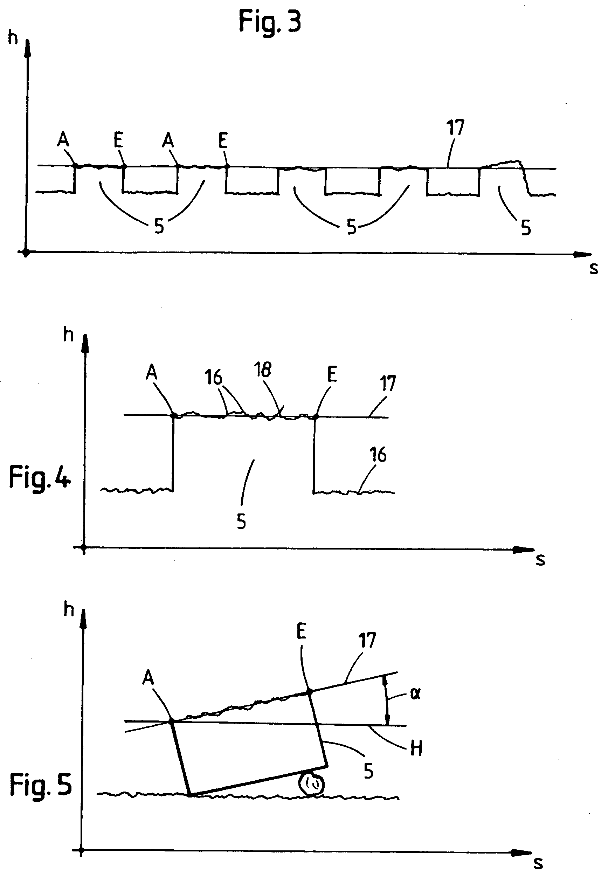

Insbesondere in Verbindung mit den Fig. 3 bis 5 wird nun das Verfahren zur Abtastung der Schwellen 5 näher beschrieben. Durch die beiden Distanzmesser 8 erfolgt eine permanente und parallele Abtastung der Schwelle 5 an zwei in Schwellenlängsrichtung voneinander distanzierten, je einer Schwellenhälfte zugeordneten Stellen. Die Distanzmesser 8 sollten einen Messabstand von etwa 700 mm, der Messbereich ± 200 mm haben. Dies ergibt eine ungefähre Höhenauflösung von etwa 0,2 mm. Die Messfrequenz sollte >1 kHz betragen. Der Messrahmen 10 wird mit Hilfe des Antriebes 14 immer gleismittig geführt, wobei die beiden Distanzmesser 8 durch den Antrieb 11 in Verbindung mit dem Inklinometer 12 permanent in einer Horizontalen gehalten werden.

Wie in Fig. 4 dargestellt, gibt es für jede Schwelle 5 einen Anfangsund Endpunkt A, E, die jeweils durch eine sprunghafte Änderung von durch die Distanzmesser 8 ermittelten Messwerten 16 gekennzeichnet sind. Über eine Vielzahl von eine einzige Schwelle 5 betreffenden und abgespeicherten Messwerten 16 bzw. deren Mittelwert wird rechnerisch eine durch beide Endpunkte A, E führende Ausgleichsgerade 17 ermittelt. Diese repräsentiert somit die Lage der oberen Schwellenfläche 18.

Gemäß Fig. 3 wird eine mehrere aufeinander folgende Schwellen 5 bzw. deren obere Schwellenflächen 18 umfassende Ausgleichsgerade 17 aus den Mittelwerten der Messwerte 16 gebildet, um damit die exakte Höhenposition registrieren zu können. Weicht eine der Schwellen 5 von dieser Ausgleichsgeraden 17 über eine zulässige Toleranzgrenze hinaus ab, dann wird eine akustische Warnung abgegeben (eventuell auch mit einem Maschinenstop). Die entsprechende Schwelle 5 kann auch mit einer Farbspritzanlage markiert werden. Eine wesentliche Abweichung der Ausgleichsgerade 17 von der Steigung null deutet auf eine gekippte Schwelle hin. Dazu wird eine durch Horizontale H und Ausgleichsgerade 17 eingeschlossener Winkel α gemessen (s. Fig. 5).

Zur Ermittlung eines Schwellenabstandes wird jeweils der Abstand zwischen Endpunkt E und Anfangspunkt A der benachbarten Schwelle 5 gemessen. Wird eine Schwelle 5 als im Abstand fehlerhaft detektiert, dann wird eine Warnung ausgegeben (eventuell auch mit Maschinenstop) und die entsprechende Schwelle 5 farbig markiert. Es ist wichtig, dass die fehlerhafte Schwelle 5 als Messbasis ausgeschieden wird. Deshalb müssen jeweils die Nachbarschwellen in die Abstandsmessung miteinbezogen und im Falle einer fehlerhaften Schwelle 5 als Messbasis verwendet werden. Sollten mehrere Schwellen 5 hintereinander falsch liegen, dann erweitert sich der Bereich der als Messbasis heranzuziehenden Schwellen 5 jeweils um ein ganzzahliges Vielfaches der Schwellenteilung. Nach spätestens drei fehlerhaft liegenden Schwellen 5 hintereinander wird eine entsprechende Meldung ausgegeben.

Da jede Schwelle 5 mit zwei Distanzmessern 8 vermessen wird, kann aus dem Abstand der beiden Distanzmessern 8 zueinander und den verschiedenen Schwellenabständen links sowie rechts der Gleismitte die Winkellage (für Gleisbogenabschnitte) berechnet und mit dem Soll-Abstand verglichen werden. Unzulässige Abweichungen werden angezeigt und fehl liegende Schwellen 5 eventuell markiert.

Abweichungen von der mittleren Höhenlage, von der Schwellenteilung und Abweichungen von der Winkellage werden in Verbindung mit einer Indizierung jeder gemessenen Schwelle 5 abgespeichert. Fehlerhafte Schwellen 5 werden elektronisch gekennzeichnet. Die Messwerte können nach Beendigung der Arbeit ausgelesen werden.

## Patentansprüche

1. Messvorrichtung zur Abtastung von auf einer Schotterbettung aufliegenden Schwellen (5) mit Hilfe eines berührungslos wirkenden, auf einem Maschinenrahmen (3) positionierten Distanzmessers (8), **gekennzeichnet durch** folgende Merkmale:
a) es sind zwei - in einer normal zu einer Maschinenlängsrichtung (6) bzw. in einer Schwellenlängsrichtung verlaufenden Richtung - voneinander distanzierte Distanzmesser (8) vorgesehen,
b) beide Distanzmesser (8) sind auf einem **durch** ein Gelenk (9) mit dem Maschinenrahmen (3) verbundenen Messrahmen (10) angeordnet, und
c) der Messrahmen (10) ist mit einem Inklinometer (12) für eine automatische Positionierung der beiden Distanzmesser (8) in einer horizontalen Lage verbunden.

2. Messvorrichtung nach Anspruch 1, **dadurch gekennzeichnet, dass** der Messrahmen (10) über eine Führung (13) in einer normal zur Maschinenlängsrichtung (6) verlaufenden Schwellenlängsrichtung relativ zum Maschinenrahmen (3) verschiebbar ist.

3. Messvorrichtung nach Anspruch 2, **dadurch gekennzeichnet, dass** ein Wegaufnehmer (15) zur Erfassung eines Verschiebeweges zwischen Maschinen- und Messrahmen (3, 10) vorgesehen ist.

4. Verfahren zur Abtastung von auf einer Schotterbettung aufliegenden Schwellen (5) mit einer Messvorrrichtung (7) gemäß einem der Ansprüche 1 bis 3, wobei eine permanente parallele Abtastung der Schwelle (5) an zwei in Schwellenlängsrichtung voneinander distanzierten, jeweils einer Schwellenhälfte zugeordneten Stellen durchgeführt wird, **dadurch gekennzeichnet, dass** jeweils über eine Vielzahl von eine einzige Schwelle (5) betreffenden und abgespeicherten Messwerten (16) rechnerisch eine Ausgleichsgerade (17) ermittelt wird.

5. Verfahren nach Anspruch 4, **dadurch gekennzeichnet, dass** jeder Ausgleichsgerade (17) ein Anfangs- und ein Endpunkt (A, E) zugeordnet wird, die jeweils durch eine sprunghafte Änderung der Messwerte (16) gekennzeichnet sind.

6. Verfahren nach Anspruch 5, **dadurch gekennzeichnet, dass** ein durch den Endpunkt (E) und den Anfangspunkt (A) zweier benachbarter Schwellen (5) begrenzter Schwellenabstand mit einem Soll-Abstand verglichen wird.

7. Verfahren nach Anspruch 4, **dadurch gekennzeichnet, dass** ein durch eine Horizontale (H) einerseits und durch die Ausgleichsgerade (17) andererseits eingeschlossener Winkel α als Schwellenneigung erfasst wird.

8. Verfahren nach Anspruch 4, **dadurch gekennzeichnet, dass** eine mehrere benachbarte Schwellen (5) umfassende verlängerte Ausgleichsgerade () ermittelt wird.

9. Verfahren nach einem der Ansprüche 4 bis 8, **dadurch gekennzeichnet, dass** von vorgegebenen Sollwerten in einem eine Toleranzgrenze überschreitenden Ausmaß abweichende Schwellen (5) farblich gekennzeichnet werden und/oder eine akustische Warnung abgegeben wird.

## Claims

1. A measuring device for scanning sleepers (5), resting upon a ballast bed, with the aid of a non-contact distance meter (8) positioned on a machine frame (3), **characterized by** the following features:
a) two distance meters (8) are provided which are spaced from one another in a direction extending perpendicularly to a longitudinal direction (6) of the machine, or in a longitudinal direction of a sleeper,
b) both distance meters (8) are arranged on a measuring frame (10) connected by a joint (9) to the machine frame (3), and
c) the measuring frame (10) is connected to an inclinometer (12) for automatic positioning of the two distance meters (8) in a horizontal position.

2. A measuring device according to claim 1, **characterized in that** the measuring frame (10) is displaceable relative to the machine frame (3) by means of a guide (13) in a longitudinal direction of the sleeper extending perpendicularly to the longitudinal direction (6) of the machine.

3. A measuring device according to claim 2, **characterized in that** a displacement transducer (15) is provided for detecting a displacement path between machine- and measuring frame (3, 10).

4. A method for scanning sleepers (5), resting upon a ballast bed, with a measuring device (7) according to one of claims 1 to 3, wherein a continuous scan of the sleeper (5) is carried out in parallel at two points which are spaced from one another in the longitudinal direction of the sleeper and associated with one sleeper half, respectively, **characterized in that**, via a multitude of stored measurement values (16) pertaining to a single sleeper (5), a compensation straight line (17) is determined in each case by computation.

5. A method according to claim 4, **characterized in that** a beginning- and an end point (A, E) is assigned to each compensation straight line (17), said points being **characterized in** each case by an erratic change of the measurement values (16).

6. A method according to claim 5, **characterized in that** a sleeper distance delimited by the end point (E) and the beginning point (A) of two adjacent sleepers (5) is compared with a desired distance.

7. A method according to claim 4, **characterized in that** an angle α enclosed by a horizontal (H) and by the compensation straight line (17) is detected as the sleeper inclination.

8. A method according to claim 4, **characterized in that** an extended compensation straight line () is determined which encompasses several adjacent sleepers (5).

9. A method according to one of claims 4 to 8, **characterized in that** sleepers (5) which deviate from prescribed desired values to a degree which exceeds a tolerance level are marked in colour and/or an acoustical warning is emitted.

## Revendications

1. Dispositif de mesure pour le balayage de traverses (5) reposant sur un lit de ballast à l'aide d'un diastimomètre (8) agissant sans contact, positionné sur un châssis de machine (3), **caractérisé par les caractéristiques suivantes** :
a) il est prévu deux diastimomètres (8) écartés l'un de l'autre dans une direction s'étendant perpendiculairement à une direction longitudinale de machine (6) ou à une direction longitudinale de traverse,
b) les deux diastimomètres (8) sont disposés sur un cadre de mesure (10) relié par une articulation (9) au châssis de machine (3), et
c) le cadre de mesure (10) est relié à un inclinomètre (12) pour un positionnement automatique des deux diastimomètres (8) dans une position horizontale.

2. Dispositif de mesure selon la revendication 1, **caractérisé en ce que** le cadre de mesure (10) peut être coulissé par le biais d'une coulisse (13) dans une direction longitudinale de traverse s'étendant perpendiculairement à la direction longitudinale de machine (6) par rapport au châssis de machine (3).

3. Dispositif de mesure selon la revendication 2, **caractérisé en ce qu'**un capteur de déplacement (15) est prévu pour la détection d'une course de coulissement entre châssis de machine et cadre de mesure (3, 10).

4. Procédé de balayage de traverses (5) reposant sur un lit de ballast avec un dispositif de mesure (7) selon une des revendications 1 à 3, dans lequel un balayage parallèle permanent de la traverse (5) est effectué à deux endroits écartés l'un de l'autre dans la direction longitudinale de traverse, associés chacun à une moitié de traverse, **caractérisé en ce qu'**une droite de compensation (17) est déterminée par calcul à chaque fois par le biais d'une pluralité de valeurs de mesure (16) concernant une seule traverse (5) et mémorisées.

5. Procédé selon la revendication 4, **caractérisé en ce qu'**un point de départ et un point d'extrémité (A, E) sont associés à chaque droite de compensation (17), lesquels sont chacun **caractérisés par** une modification discrète des valeurs de mesure (16).

6. Procédé selon la revendication 5, **caractérisé en ce qu'**un écart de traverse limité par le point d'extrémité (E) et le point de départ (A) de deux traverses voisines (5) est comparé à un écart de consigne.

7. Procédé selon la revendication 4, **caractérisé en ce qu'**un angle α inclus d'un côté par une horizontale (H) et de l'autre côté par la droite de compensation (17) est détecté comme inclinaison de traverse.

8. Procédé selon la revendication 4, **caractérisé en ce qu'**une droite de compensation () prolongée comprenant plusieurs traverses voisines (5) est déterminée.

9. Procédé selon une des revendications 4 à 8, **caractérisé en ce que** des traverses (5) déviant de valeurs de consigne prédéfinies dans une ampleur dépassant une limite de tolérance sont caractérisées de manière colorée et/ou un avertissement acoustique est émis.
